(19) Europäisches Patentamt

European Patent Office

Office européen des brevets

(11) **EP 0 742 890 B2**

(12) **NEUE EUROPÄISCHE PATENTSCHRIFT**

(45) Veröffentlichungstag und Bekanntmachung des Hinweises auf die Entscheidung über den Einspruch:
**20.12.2006 Patentblatt 2006/51**

(45) Hinweis auf die Patenterteilung:
**11.08.1999 Patentblatt 1999/32**

(21) Anmeldenummer: **95908870.9**

(22) Anmeldetag: **27.01.1995**

(51) Int Cl.:
*G01C 21/20* (2006.01)          *G07B 15/00* (2006.01)
*G01C 21/26* (2006.01)

(86) Internationale Anmeldenummer:
**PCT/DE1995/000104**

(87) Internationale Veröffentlichungsnummer:
**WO 1995/020748 (03.08.1995 Gazette 1995/33)**

(54) **VERFAHREN ZUR ERMITTLUNG VON GEBÜHREN FÜR DIE NUTZUNG VON VERKEHRSWEGEN DURCH FAHRZEUGE**

METHOD OF DETERMINING TOLL CHARGES FOR VEHICLES USING A TRAFFIC ROUTE

PROCEDE PERMETTANT DE DETERMINER LES DROITS DE PEAGE A ENCAISSER POUR DES VOIES EMPRUNTEES PAR LES VEHICULES

(84) Benannte Vertragsstaaten:
**AT BE CH DE DK ES FR GB GR IE IT LI LU MC NL PT SE**

(30) Priorität: **28.01.1994 DE 4402614**

(43) Veröffentlichungstag der Anmeldung:
**20.11.1996 Patentblatt 1996/47**

(73) Patentinhaber: **T-Mobile Deutschland GmbH**
**53227 Bonn (DE)**

(72) Erfinder:
• **MERTENS, Reinhold**
**D-91207 Lauf a.d. Pegnitz (DE)**
• **KREMER, Werner**
**D-53604 Bad Honnef (DE)**
• **PERTZ, Uwe**
**D-50126 Bergheim (DE)**

(74) Vertreter: **Riebling, Peter**
**Patentanwalt,**
**Rennerle 10**
**88131 Lindau (DE)**

(56) Entgegenhaltungen:
EP-A- 0 394 517          EP-A- 0 503 870
EP-A- 0 566 390          WO-A-92/10824
WO-A-95/14909          DE-A- 4 039 887
US-A- 4 924 402

• **PATENT ABSTRACTS OF JAPAN vol. 8 no. 18 (P-250) [1455] ,26.Januar 1984 & JP,A,58 178214 (MITSUBISHI) 19.Oktober 1983,**

EP 0 742 890 B2

**Beschreibung**

Die Erfindung betrifft ein Verfahren zur Ermittlung von Gebühren für die Nutzung von Verkehrswegen durch Fahrzeuge, wobei die geographische Position eines Fahrzeugs laufend mit Hilfe von Funkortung, insbesondere mit dem GPS-System, ermittelt und mit geographischen Positionen von virtuellen Erhebungsstellen verglichen wird.

Zur Erhebung von Nutzungsgebühren (Maut) für Verkehrswege, insbesondere Straßen, sind verschiedene Verfahren bekannt geworden. Allgemeine Verbreitung haben bis jetzt jedoch nur Mautstationen gefunden, an denen die Fahrzeuge anhalten und nach Entrichtung der Maut die gebührenpflichtige Straße befahren dürfen. Bei viel befahrenen Straßen führt dieses trotz einer Vielzahl einzelner Zahlstellen zu Staus. Auch Einrichtungen, bei denen man in langsamer Fahrt eine Münze in einen Trichter wirft, bringen nur beschränkt Abhilfe.

Ein in VDI Nachrichten vorn 20.08.93, Seite 2 bis 3 beschriebenes Erfassungssystem nutzt eine Positionsbestimmung des Fahrzeugs mit Hilfe des GPS-Systems (Global Positioning System), mit welchem eine Positionsbestimmung durch Satelliten erfolgt. Damit sind lediglich virtuelle Erhebungsstellen erforderlich, so daß der Aufwand für geeignete Bauwerke entfällt.

Ferner betrifft die gleichzeitig eingereichte Patentanmeldung "Verfahren und Anordnung zur Ermittlung von Nutzungsgebühren für Verkehrswege und/oder Verkehrsflächen" der Anmelderin ein Verfahren, bei welchem ebenfalls das GPS-System benutzt wird. Die Positionsbestimmung mit Hilfe des GPS-Systems ist mit einem Meßfehler von etwa 100 m behaftet. Für die Frage der Gebührenerhebung ist es jedoch beispielsweise wichtig, ob ein Fahrzeug auf einer gebührenpflichtigen Autobahn oder auf einer neben der Autobahn verlaufenden gebührenfreien Straße fährt.

Aufgabe der vorliegenden Erfindung ist es, unter Benutzung eines Funkortungssystems eine zuverlässige Feststellung zu ermöglichen, ob ein Fahrzeug eine Erhebungsstelle passiert.

Diese Aufgabe wird erfindungsgemäß dadurch gelöst, daß die virtuellen Erhebungsstellen von Erfassungsabschnitten gebildet werden, die sich über vorgegebene Längen in Richtung des jeweiligen Verkehrsweges erstrecken.

Zur Durchführung des erfindungsgemäßen Verfahrens ist vorzugsweise im Fahrzeug ein Rechner angeordnet, der den Vergleich vornimmt, wozu die Positionen der Erfassungsabschnitte zur Verfügung stehen müssen. Dieses kann derart erfolgen, daß alle Positionen im Rechner gespeichert sind oder daß nur Positionen von Erhebungsstellen in einem begrenzten Bereich gespeichert sind und Positionen weiterer Erhebungsstellen bei Bedarf über ein Datenübertragungssystem zugeführt werden können.

Eine erste Ausführungsform des erfindungsgemäßen Verfahrens ist dadurch gekennzeichnet, daß jeweils ein Erfassungsabschnitt aus mehreren durch ihre geographischen Positionen festgelegten Referenzpunkten besteht, deren Abstand kleiner als der Meßfehler des Funkortungssystems ist. Vorzugsweise ist dabei vorgesehen, daß jeweils ein Teil der Referenzpunkte eines Erfassungsabschnittes eine Referenzgruppe bilden.

Zur Auswertung des Vergleichs kann dabei vorgesehen sein, daß ein Fahrzeug als die Erhebungsstelle passiert gilt, wenn alle Referenzpunkte bzw. alle Referenzgruppen eine Entfernung von für das Fahrzeug ermittelten Positionen aufweisen, die kleiner als eine vorgegebene Entfernung sind.

Bei einer zweiten Ausführungsform des erfindungsgemäßen Verfahrens kann gegebenenfalls Speicherplatz dadurch gespart werden, daß die Erhebungsstellen aus einem oder mehreren durch ihre geographische Position festgelegten Referenzpunkten und einer den Straßenverlauf innerhalb des Erfassungsabschnitts kennzeichnenden Funktion bestehen (Gerade, Kurve). Eine Auswertung kann dabei dadurch erfolgen, daß ein Fahrzeug als die Erhebungsstelle passiert gilt, wenn keiner der Punkte der Kurve weiter als der Meßfehler des Funkortungssystems von einer der laufend bestimmten geographischen Positionen des Fahrzeugs entfernt liegt.

Die fortlaufende Prüfung, ob sich das Fahrzeug in einem der möglicherweise vielen erfassungsabschnitle befindet, bedeutet einen erheblichen Rechenaufwand. Dieses steht im Gegensatz dazu, daß beim Durchfahren eines Erfassungsabschnittes eine schnelle Berechnung erforderlich ist.

Bei einer Weiterbildung des erfindungsgemäßen Verfahrens ist daher vorgesehen, daß vor einer Prüfung, ob sich das Fahrzeug im Erfassungsabschnitt befindet, durch Positionsvergleiche geprüft wird, ob sich das Fahrzeug in einem den Erfassungsabschnitt im wesentlichen umfassenden Gebiet mit größerer Fläche befindet. Das Gebiet größerer Fläche ist vorzugsweise ein Rechteck.

Ausführungsbeispiele der Erfindung sind in der Zeichnung anhand mehrerer Figuren dargestellt und in der nachfolgenden Beschreibung näher erläutert. Es zeigt:

Fig. 1    ein Beispiel eines Erfassungsabschnittes,

Fig. 2    eine schematische Darstellung zweier Erfassungsabschnitte für jeweils eine Fahrtrichtung und eines Erfassungsabschnittes für beide Fahrtrichtungen,

Fig. 3    eine weitere Darstellung eines Erfassungsabschnittes zusammen mit einem Gebiet größerer Fläche - im folgenden Umbrella-Gebiet genannt - und

Fig. 4    eine Fuzzy-Kennlinie.

1. Modell der Erfassungsstelle

1.1 Erfassungsabschnitt als Erfassungsstelle

Als Erfassungsstelle wird der Ort der Gebührenerfassung an der Autobahn allgemein bezeichnet. In bakenorientierten Systemen wird sie als punktförmiges System, eben durch die Bake, technisch realisiert.

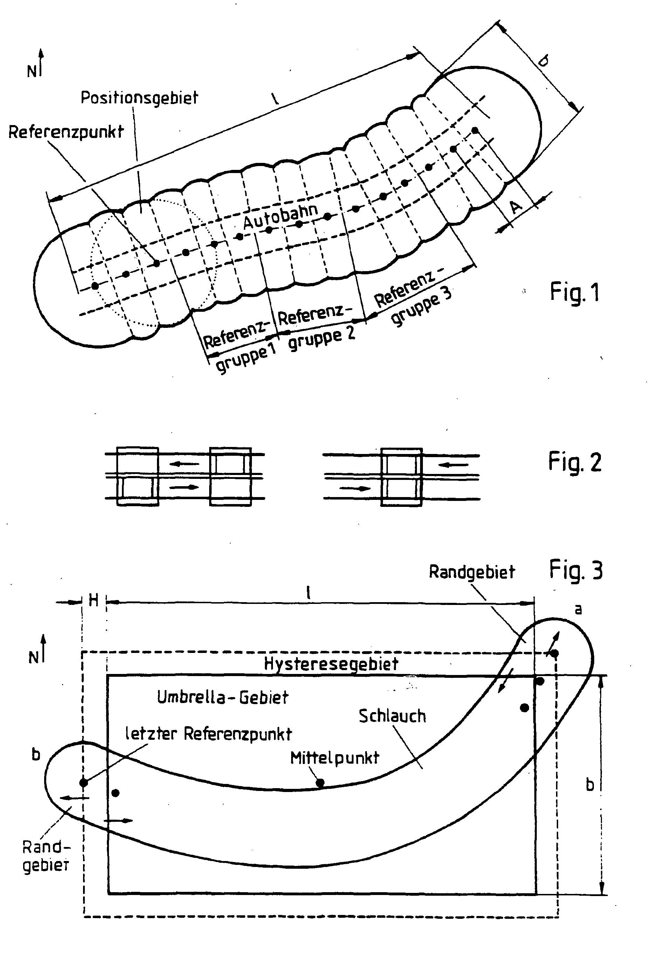

Wegen der Ungenauigkeit der Positionsbestimmung mit GPS kann nicht zuverlässig erkannt werden, daß sich ein Fahrzeug an einem bestimmten Punkt aufhält. Um die Ungenauigkeit des GPS zu tolerieren, wird die Erfassungsstelle nicht punktförmig, sondern flächenförmig als Erfassungsabschnitt angelegt (Fig. 1). Als Erfassungsabschnitt wird die Kette der Referenzpunkte bezeichnet. Mit den Referenzpunkten werden die aktuellen GPS-Meßwerte verglichen. Jeder Referenzpunkt n (n=1..N) wird definiert durch seine Koordinaten:

Längengrad des Referenzpunkts $L_n$ [ ° / ' / " ][ real ° ]
Breitengrad des Referenzpunkts $B_n$ [ ° / ' / " ][ real ° ]

Die Festlegung der Referenzpunkte erfolgt beim Einrichten des Erfassungsabschnitts. Diesem Problemkreis widmet sich gesondert der Abschnitt 1.4. Die Zahl und Anordnung der Referenzpunkte im Erfassungsabschnitt richten sich nach:

- dem Zeitintervall zwischen den Positionsmessungen,
- der maximalen Fahrgeschwindigkeit auf dem Autobahnabschnitt,
- der Gestalt der Fuzzy-Kennlinie im unscharfen Entscheidungsmodell des Lokalisierungsalgorithmus (Abschnitt 2.2.5),
- einem akzeptablen Aufwand für die Speicherung der Referenzpunktkoordinaten,
- einem akzeptablen Aufwand an Rechenzeit für die Zuordnung zu einem Referenzpunkt im Meßalgorithmus (ersten Teil des Lokalisierungsalgorithmus).

Die insgesamt große Anzahl von Referenzpunkten ist notwendig, weil man bei hoher Geschwindigkeit rasch an einem einzelnen Punkt vorbeigefahren ist und sich schon wieder in recht großer Entfernung zu ihm befinden kann. Mehrere Referenzpunkte mit ODER-Verknüpfung helfen dem ab. Es ist dann egal, welchem Referenzpunkt [einer Referenzgruppe (Abschnitt 1.2)] man sich genähert hat, zu dem dann die Zuordnung erfolgt.

Zu den Referenzpunkten werden Positionsgebiete zugeordnet. Sie berücksichtigen die Unschärfe der Positionsbestimmung, indem umliegende Meßwerte "eingefangen" werden. Die Positionsgebiete haben die Form von abgeschnittenen Kreisen. Die jeweilige Schnittgerade entspricht dem im Mittelpunkt zwischen benachbarten Referenzpunkten gefällten Lot. Die Zuordnungsweise wird im Abschnitt 2.1 beschrieben.

Alle Positionsgebiete des Erfassungsabschnitts bilden einen raupenförmigen Schlauch (Fig.1) mit der

Länge des Schlauchs 1 [m]
Breite des Schlauchs b [m] = Durchmesser eines Positionsgebiets.

Der Schlauch ist als überlagerte Struktur zur Kette der Referenzpunkte aufzufassen und dient dem Entscheidungsalgorithmus (Abschnitt 2.2) zur Abschätzung des Verhältnisses autobahnferne/autobahnnahe Meßpunkte, das ein wichtiger Indikator für die Gebührenerhebung ist. Die Länge richtet sich nach der/dem

Anzahl der Referenzpunkte im Erfassungsabschnitt N
Abstand der Referenzpunkte A [m].

Die Schtauchbreite/der Durchmesser eines Positionsgebiets muß deutlich größer als der Abstand der Referenzpunkte sein (A<b), damit die Schlaucheinkerbungen hinreichend klein werden.

Je länger der Erfassungsabschnitt gewählt, desto größer ist die Sicherheit, daß Fahrzeuge auf kreuzenden, tangierenden oder parallellaufenden Straßen von der Gebührenerhebung ausgeschlossen werden. Dagegen muß ein Fahrzeug auf der Autobahn den Schlauch in seiner gesamten Länge passieren, ehe es zur Entscheidung über die Gebührenerhebung kommt. So kann es für einen Autobahnabschnitt in einem einsamen Waldgebiet vollkommen ausreichend sein, daß der Erfassungsabschnitt nur 6-8 Referenzpunkte enthält. Dagegen muß er bei vielen kreuzenden und tangierenden Straßen und Fahrwegen auf etwa das 3- bis 8-fache verlängert werden, wenn die erforderliche Sicherheit der Lokalisierung eingehalten werden soll.

Die Festlegung der Strukturparameter des Erfassungsabschnitts kann erst im Abschnitt 6 detailliert beschrieben werden.

Die Erfassungsabschnitte können im offenen AGE-System

einseitig paarweise (nur für eine Fahrbahn gültig)
zweiseitig (für beide Fahrbahnen gültig)

angelegt werden (Fig. 2).

Als wichtige Randbedingung ist zu beachten, daß sich Erfassungsabschnitte nicht überlappen dürfen, wenn der hier vorgeschlagenen Lokalisierungsalgorithmus funktionieren soll. Für offene AGE-Systeme stellt das keine größere Einschränkung der Gestaltungsfreiheit dar, da bei diesen die Erfassungsabschnitte zwischen den Anschlußstellen angeordnet sind. Für geschlossene AGE-Systeme stellt sich die Frage, ob mit dem "einfachen GPS" überhaupt sichere Erfassungsabschnitte an den recht kurzen Auf- (oder Ab-)fahrten der Autobahnen eingerichtet werden können. Die Toleranzen der Positionsbestimmung sind sehr groß, so daß das differential GPS besser geeignet erscheint.

1.2 Bildung von Referenzgruppen

Für den Entscheidungsalgorithmus (zweiten Teil des Lokalisierungsalgorithmus) werden die Referenzpunkte in Referenzgruppen eingeteilt, wobei jede Referenzgruppe etwa gleich viele Referenzpunkte enthält, die in beschriebener Weise logisch ODER-verknüpft werden. Die Numerierung der Referenzgruppen erfolgt bei einseitigen Erfassungsabschnitten fortlaufend in der Fahrtrichtung, bei zweiseitigen Erfassungsabschnitten in einem beliebigen Richtungssinn (z.B. entsprechend der Kilometrierung) (a. Abschnitt 2.2.3). Die Referenzgruppe g (g=1..G) ist charakterisiert durch die

Anzahl der Referenzpunkte $N_g$ und den
Abstand der Referenzpunkte A.

Die Anzahl der Referenzgruppen im Erfassungsabschnitt G wird bestimmt durch die angestrebte Zuverlässigkeit der Lokalisierung des Erfassungsabschnitts, die sich mit wachsender Anzahl erhöht. Gleichzeitig erhöht sich auch der Aufwand für die Lokalisierung und vor allem auch die Zeit bis zur Entscheidung über die Gebührenerhebung. Die Anzahl der Referenzgruppen muß unter Beachtung der konkreten örtlichen Bedingungen (parallele Straßen, Schwarzabfahrten, Empfangsabschattungen) festgelegt und optimiert werden. Die Gebührenerfassung darf keinesfalls auf parallelverlaufende Land- oder Stadtstraßen übergreifen. Für eine positive Entscheidung über die Gebührenerhebung ist eine der Voraussetzungen, daß in jeder wirksamen Referenzgruppe zumindest ein Meßwert zu liegen kommt (Abschnitt 2.2.5).

Der konstante Abstand der Referenzpunkte A ist als Maximalwert einzuhalten. Kleinere, dann auch unregelmäßige Abstände sind möglich, aber uneffektiv (Abschnitt 6). Unter schwierigen örtlichen Bedingungen (Empfangsabschattungen durch Böschungen, Brücken, Tunnel u.s.w.) können die Referenzgruppen vergrößert oder unwirksame Referenzgruppen eingebaut werden, was dem entwickelten Lokalisierungsalgorithmus keine Probleme bereiten wird. Es erhöht sich jedoch die gesamte Schlauchlänge und damit die Zeit, bis eine Entscheidung über die Gebührenerhebung gefällt sein wird. Eingetragene Meßwerte in unwirksamen Referenzgruppen werden nicht für den, Entscheidungsalgorithmus herangezogen (Abschnitt 2.2).

1.3 Überlagerte Umbrella-Gebiete

Für das effektive Funktionieren des Lokalisierungsalgorithmus muß eine weitere Modellstruktur vorgesehen werden, die dem gesamten Erfassungsabschnitt überlagert wird. Das Umbrella-Gebiet ist rechteckförmig und schließt den Schlauch eines Erfassungsabschnitts vollständig mit Ausnahme gewisser Randbereiche ein (Fig.3). Es ist im Prinzip eine praktikable Approximation des Schlauchs. Das raupenförmige Gebilde wird mit einem Rechteck überlagert, dessen Kanten nach den Längen- und Breitenkreisen hin ausgerichtet sind.

Die rechteckigen Umbrella-Gebiete erlauben eine sehr einfache Abtestung; ob man sich überhaupt in der Nähe von Referenzpunkten, d.h. eines Erfassungsabschnittes, befindet. Bei dem raupenförmigen Schlauch wäre der Aufwand an Rechenzeit und Vergleichsdaten ungleich höher. Bei ca. 4000 Erfassungsstellen auf den Autobahnen Deutschlands ist die schnelle Erkennung des Erfassungsabschnitts sehr wichtig. Im Schnittpunkt der Diagonalen liegt der Mittelpunkt des Umbrella-Gebiets. Das Umbrella-Gebiet wird durch folgende Kenngrößen beschrieben:

Längengrad des Mittelpunkts L [ ° / ' / " ][ real ° ],
Breitengrad des Mittelpunkts B [ ° / ' / " ][ real ° ],
Länge des Umbrella-Gebiets 1 [m],
Breite des Umbrella-Gebiets b [m].

Um das Umbrella-Gebiet herum wird noch ein Hysterese-Gebiet als Rahmen angelegt, damit der Meßalgorithmus sicher arbeitet und robust gegen geringfügige Positionsänderungen ist.

Die Hysterese H [m] ist die Rahmenbreite. Sie sollte mit 10m < H < 50m angesetzt werden. Größere zufällige Quersprünge seitlich zur Autobahnlinie als 50m sind selten. Kleinere Werte schaden dem Lokalisierungsalgorithmus nur insofern, als daß öfter Fehlaktivierungen des Entscheidungsalgorithmus durch kurzzeitiges Befahren und Verlassen des Umbrella-Gebiets entstehen können, wenn die Fahrtrichtung dem Rand des Gebiets folgt. Dann wird kostbare Rechenzeit verschenkt.

Fig. 3 stellt auch die Festlegung der Begrenzung des Hysterese- und des Umbrella-Gebiets dar. Die Außengrenze des Hysterese-Gebiets verläuft durch den letzten Referenzpunkt des Schlauches. Die Begründung dafür wird im Abschnitt 2.1.4 gegeben. Der Fall a beschreibt eine Ecke, der Fall b eine Kante des Hysterese-Gebiets. Die Rahmenbreite ist durch H eindeutig gegeben. Alle Referenzpunkte, deren Positionsgebiete nicht vollständig innerhalb des Umbrella-Gebiets liegen, werden als unwirksame Rand-Referenzgruppe zusammengefaßt.

2. Algorithmus zur Lokalisierung mit GPS

2.1 Meßalgorithmus

2.1.1 Kontinuierliches Messen der Position

Der gesamte Algorithmus zur Lokalisierung von Gebührenerfassungsstellen basiert auf der kontinuierlichen Positionsbestimmung mit Hilfe des GPS. Das Meßintervall T zwischen zwei Positionsbestimmungen ist abhängig vorn eingesetzten GPS-Empfänger. Bei den zur Zeit erhältlichen Empfängern liegen die Meßintervalle zwischen 0,5s und 1 s. Längere Meßintervalle erscheinen bedenklich, da die Fahrgeschwindigkeit v auf Autobahnen recht hoch ist.

Geschwindigkeitsbeschränkungen im Bereich von Gebtihrenerfassungsstellen sollten nicht vorausgesetzt werden, so daß für die maximale Fahrgeschwindigkeit vmax = 216 km/h = 60 m/s angesetzt wurde. Dann wird im Meßintervall von 0,5s etwa ein Weg von 30m zurückgelegt. Bei einem Meßintervall von 1s wären das schon 60m.

2.1.2 Erreichen des Umbrella- und Verlassen des Hysteresegebiets

Im Grundzustand befindet sich das Fahrzeug weit außerhalb jeglicher Gebührenerfassungsstellen auf Autobahnen. Dieser Zustand wird im Meßalgorithmus als OUT bezeichnet. Das Gegenteil ist der Zustand IN, wenn die Position des Fahrzeugs innerhalb eines Umbrella- bzw. Hysteresegebiets liegt.

Übergang von OUT nach IN:

Der momentane Meßwert, bestehend aus Längen- und Breitenkoordinate, wird mit den Mittelpunkten aller Umbrella-Gebiete verglichen. Ein Umbrella-Gebiet ist erreicht, wenn gilt:

$$K_L \cdot IL - \Lambda I \leq \frac{\lambda}{2} \text{ UND } K_B \cdot IB - BI \leq \frac{\beta}{2} \qquad (2.1)$$

Der Index des Umbrella-Gebiets (Erfassungsabschnitts) wird bestimmt, danach werden die Referenzdaten zu allen Positionsgebieten des Erfassungsabschnitts geladen.

Übergang von IN nach OUT:

Der momentane Meßwert, bestehend aus Längen- und Breitenkoordinate, wird mit dem Mittelpunkt des aktuellen Umbrella- bzw. Hysterese-Gebiets verglichen. Wenn erstmals gilt, daß

$$K_L \cdot IL - \Lambda I > \frac{\lambda}{2} - H \text{ ODER } K_B \cdot IB - BI > \frac{\beta}{2} + H \qquad (2.2)$$

so geht der Algorithmus in den Zwischenzustand OUT_PROVE über. Als Bestätigungswert C wird die Anzahl von unmittelbar aufeinanderfolgenden Meßpunkten bezeichnet, für die die Beziehung (2.2) erfüllt sein muß, ehe der Wechsel vom Zustand OUT_PROVE in den Zustand OUT erfolgt. Der Parameter liegt vorzugsweise je nach Hysterese in einem Bereich zwischen 1 .. 5.

Nach dem endgültigen Übergang von IN (bzw. OUT_PROVE) nach OUT wird der Entscheidungsalgorithmus aktiviert. Dieser kurzzeitige Zustand, in dem der Entscheidungsalgorithmus abläuft, wird als OUT_DECIDE bezeichnet. Die Gesamtdarstellung des Algorithmus als Flußdiagramm ist im Abschnitt 2.3 enthalten.

Die in den Formeln (2.1) und (2.2) verwendeten Koeffizienten sind der

Umrechnungsfaktor [ real° ] -> [m] für Längendifferenzen KL = 72000
Umrechnungsfaktor [real° ] -> [m] für Breitendifferenzen KB = 108000
Erdumfang = Erdradius · $2\pi$ = 6378 000 m · $2\pi$ = 40 074 155 m 1/10 Bogensekunde im Breitengrad = Erdumfang/360/36000 = 3.092 m = 3m
1/10 Bogensekunde im Längengrad auf dem 50sten Breitengrad = 3.092 m · cos 50° = 1.987 m = 2m

Die Rundung auf ganze Zahlen bringt Geschwindigkeitsvorteile bei der rechentechnischen Umsetzung.

2.1.3 Zuordnen der Meßwerte zu den Referenzpunkten

Im Zustand IN wird der momentane Meßwert, bestehend aus Längen- und Breitenkoordinate, mit allen Referenzpunkten des Schlauchs verglichen. Es wird der Radial-Abstand zu jedem Referenzpunkt ermittelt mit:

$$R_n = \sqrt{[K_L(L-L_n)]^2 + [K_B(B-B_n)]^2} \qquad (2.3)$$

Danach ist die Frage zu beantworten, in der Umgebung welches Referenzpunkts die gemessene Position liegt. Als Kriterium dafür wird der minimale Wert aus allen Rn angesehen. Eine geometrische Interpretation ergibt sich aus der Überlagerung der Positionsgebiete (Fig. 1). Die im Mittelpunkt zwischen zwei benachbarten Referenzpunkten errichtete Senkrechte teilt ein, ob die Zuordnung zu dem einen oder dem anderen Referenzpunkt erfolgt. Wichtig zu sagen ist, daß zunächst die Zuordnung von Meßwerten in der Querrichtung zur Autobahn auch über die Positionsgebiete hinaus erfolgt, wenn sie innerhalb des Umbrella- bzw. Hysteresegebiets liegen. Diese Zuordnungswerte haben allerdings nur temporäre Bedeutung für den Meßalgorithmus, da sie der Entscheidungsalgorithmus mit seinen Mitteln ignorieren wird (Abschnitt 2.2.5). Die vorzeitige Beschränkung auf die Posftionsgebiete würde die Berücksichtigung der Präzision der Meßwerte verzerren.

Der Radialabstand wird durch folgende Beziehung modifiziert:

$$\rho_n = R_n[1 + \eta_E(P - 1)] \qquad (2.4)$$

Die enthaltenen Parameter sind:

modifizierter Radialabstand m
Präzision P
Präzisions-Einflußkoeffizient hE

Der Meßwert wird dem Referenzpunkt zugeordnet, zu dem der modifizierte Radial-Abstand am kleinsten ist.
Die Beziehung (2.4) bedarf der Erklärung. Es gibt
Quersprünge und -ausreißer, die aber mit einer erhöhten PDOP (Abschwächung der Präzision) korrelieren. Sie können dann gefährlich werden, wenn sich Fahrzeuge auf parallelen Straßen bewegen und in allen Referenzgruppen Ausreißer zu finden sind, die in unmittelbarer Nähe der Autobahn liegen. Die vorgeschlagene Modifikation stellt eine Möglichkeit dar, nahe Meßwerte mit hoher PDOP und entfernte Meßwerte mit niedriger PDOP besser gegeneinander abzuwägen. Nahe Meßwerte mit niedriger und mittlerer PDOP, wie sie im Normalfall beim Befahren der Autobahn vorliegen, werden stärker hervorgehoben.

Die Idee der Verknüpfung von Quer- bzw. Radialabstand und PDOP kann nur empirisch verwirklicht werden. Die analytischen Zusammenhänge sind zu kompliziert, als daß sie mit vernünftigem Aufwand zu erfassen wären. Die PDOP wird zunächst in die Präzision überführt, indem folgende Beziehung verwendet wird:

$$P = \eta_U \cdot PDOP = \begin{cases} PDOP; & \text{wenn Sat\#=4} \\ (1.15..1.35) \cdot PDOP; & \text{wenn Sat\#=3} \end{cases} \qquad (2.5)$$

Damit werden 3D- und 2D-Messungen angeglichen. Der enthaltene Parameter wird Präzisions-Umrechnungskoeffizient hU genannt. Eine andere Möglichkeit ist, die Präzision generell durch die HDOP zu erhalten.

Der modifizierte Radialabstand ist dem eigentlichen Radialabstand identisch für einen Präzisions-Einflußkoeffizienten hE=0. Der Präzisions-Einflußkoeffizient verstärkt und dämpft die Wirkung der Multiplikation mit der Präzision.

hE=0: keine Modifikation, r=R
hE<1: gedämpfte Modifikation
hE>1: verstärkte Modifikation

Der modifizierte Radialabstand wird nur im Meßalgorithmus und bei der Komprimierung der Meßwerte im Entscheidungsalgorithmus (Abschnitt 2.2.2) verwendet, nicht aber beim fuzzy-logischen Entscheiden über die Gebührenerhebung (Abschnitt 2.2.5).

Beispiel mit h=0.8 und Sat#=4:

1. Wert: R=90m, P=3.1 (ferner Wert mit kleiner PDOP/höhere Genauigkeit),
2. Wert: R=60m, P=8.4 (naher Wert mit großer PDOP/geringere Genauigkeit),

$$90 \, [1+0.8(3.1-1)] = 241.2 < 60 \, [1+0.8(8.4-1)] = 415.2$$

Der Zuordnungswert ist der mit der höheren Genauigkeit, auch wenn er weiter entfernt liegt. Der zufällige Sprung in die Nähe der Autobahn wird eliminiert, da er eine große PDOP aufweist.

Um die Rechenoperationen mit den Beziehungen (2.3) und (2.4) zu beschleunigen, werden die quadrierten Gleichungen implementiert. Das aufwendige Berechnen der Quadratwurzel entfällt dann.

$$R_n^2 = [K_L(L-L_n)]^2 + [K_B(B-B_n)]^2 \qquad (2.3)'$$

$$p_n^2 = R_n^2[1 + \eta(P-1)]^2 \qquad (2.4)'$$

Ist zu einem Referenzpunkt bereits ein Meßwert vorgemerkt, so wird er mit dem gerade erhaltenen verglichen. Der Meßwert mit dem kleineren (quadrierten) modifizierten Radial-Abstand wird weiter gemerkt. Tritt ein Wechsel in der Zuordnung zu einem Referenzpunkt ein, so wird der zuletzt gemerkte Wert mit dem kleinsten (quadrierten) modifizierten Radial-Abstand dem alten Referenzpunkt bindend zugeordnet. Für den neuen Referenzpunkt beginnt das Vormerken von vorn.

Im Meßalgorithmus läuft ein Zähler F mit, der beim Betreten des Umbrella-Gebiets auf F0=1 initialisiert wird und sich immer um DF=1 erhöht, wenn der Wechsel von einem Referenzpunkt zum nächsten erfolgt. Der Zählerstand wird dem Referenzpunkt mit zugeordnet und dient zur Auswertung der Durchfahrfolge im Entscheidungsalgorithmus (Abschnitt 2.2).

2.1.4 Verarbeiten von schlauchfernen Positionen

Als schlauchfern werden solche gemessenen Positionen bezeichnet, die noch innerhalb des Umbrella- bzw. Hysteresegebiets liegen, aber nicht mehr im Schlauch. Sie erfüllen die Bedingung (2.6) nicht.

$$\hat{R}_n \le \frac{b}{2} \text{ bzw. } R_n^2 \le \frac{b^2}{4} \qquad\qquad (2.6)$$

Sie deuten in hohem Maße darauf hin, daß sich das Fahrzeug nicht auf der Autobahn bewegt. Es ist aber auch möglich, daß durch schwer benennbare Einflüsse in der Meßreihe zufällige Sprünge zustandekommen, die Positionen außerhalb des Schlauchs anzeigen. Die folgenden Maßnahmen bereiten die Auswertung dieser Informationen im Entscheidungsalgorithmus (Abschnitt 2.2.1) vor, insbesondere die Ermittlung des Schlauchkoeffizienten.

Im Meßalgorithmus laufen zwei Zähler J1 und J2 mit, die beim Betreten des Umbrella-Gebiets auf J01=0 und J02=0 initialisiert werden. Der erste Zähler bezieht sich auf gemessene Positionen, die innerhalb des Schlauchs liegen und die Bedingung (2.6) erfüllen, und erhöht sich um DJ1=1 . Der zweite Zähler bezieht sich auf gemessene Positionen, die außerhalb des Schlauchs liegen und die Bedingung (2.5) nicht erfüllen, und erhöht sich in diesem Fall um DJ2=1.

Damit die Zählung unverfälscht funktioniert, muß der Schlauch ein Stück über die Außengrenze des Hysteresegebiets hinausragen (Fig. 3). Wäre der Schlauch kürzer, so gäbe es im Gebiet zwischen dem Schlauchende und der Außengrenze des Hysteresegebiets mögliche Meßpositionen, die sehr nahe an der Autobahn liegen, aber in keinem Positionsgebiet mehr zugeordnet werden. Damit würde sich fälschlicherweise der zweite Zähler erhöhen und nicht der erste. Die Konstruktion des Randgebiets ist aber auch nicht übermäßig kritisch, da beim Durchfahren des Schlauchs sehr viele innerhalb liegende Positionen gezählt werden, so daß einige wenige außerhalb liegende nicht zu sehr ins Gewicht fallen. Die Regel, daß die Außengrenze des Hysteresegebiets durch den letzten Referenzpunkt des Schlauchs läuft, ist eine einfache Lösung für das beschriebene Problem.

2.2 Entscheidungsalgorithmus

2.2.1 Ermitteln des Schlauchkoeffizienten

Der Schlauchkoeffizient J wird definiert mit:

$$J = \frac{J_1}{J_1 + J_2} \; ; \; \sigma \le J \le 1 \qquad\qquad (2.7)$$

Er gibt an, welcher Anteil der im Erfassungsabschnitt aufgenommenen Meßpositionen innerhalb des Schlauchs liegt. Ein hoher Wert nahe 1 deutet darauf hin, daß sich das Fahrzeug sehr wahrscheinlich auf der Autobahn bewegt hat. Ein Wert unter 0.5 läßt darauf schließens daß das Fahrzeug ein Stück parallel zur Autobahn gefahren und dann abgeschwenkt ist oder die Autobahn gekreuzt hat.

Der Vergleich des Schlauchkoeffizienten mit dem Schlauchsollwert W ist der erste Schritt des Entscheidungsalgorithmus und verkörpert im Prinzip eine vorangehende, schnelle Grobselektierung darüber ob sich die Aktivierung der weiteren komplizierteren Entscheidungsmodelle überhaupt lohnt. Der Entscheidungsalgorithmus wird abgebrochen, wenn J<W gilt. In diesem Fall hat das Fahrzeug nicht zu bezahlen.

Die Festlegung des Schlauchsollwerts W ist Gegenstand der Parameteroptimierung (Abschnitt 6.3), er liegt etwa im Bereich 0.6 .. 0.9.

2.2.2 Komprimieren der Meßwerte in den Referenzgruppen

Der weitere Entscheidungsalgorithmus arbeitet nicht mit den einzelnen Referenzpunkten, sondern nur mit den wirksamen Referenzgruppen.

Die Komprimierung der Meßwerte, bestehend aus Längen- und Breitenkoordinate, erfolgt wiederum nach dem Kriterium des kleinsten (quadrierten) modifizierten Radial-Abstands. Für eine logische ODER-Verknüpfung der Referenzpunkte einer Referenzgruppe hat der Zuordnungswert die höchste Aussagekraft, der dem Referenzpunkt am nächsten ist. Der mathematisch exakte Beweis hierzu kann auf den Grundlagen der Fuzzy-Logik aufgebaut werden.

Der gespeicherte Meßwert eines Referenzpunkts, dessen modifizierter Radial-Abstand am kleinsten ist, wird als signifikanter Meßwert der Referenzgruppe benutzt.

Für diesen Meßwert am n-ten Referenzpunkt sind folgende Parameter zu merken:

Längendifferenz zum Referenzpunkt δL = KL(L-Ln) Breitendifferenz zum Referenzpunkt δB = KB(B-Bn) Präzision (DOP)

Alle anderen Meßwerte werden bezüglich des fuzzy-logischen Entscheidungsmodells (Abschnitt 2.2.3) bedeutungslos. Ist in einer wirksamen Referenzgruppe überhaupt kein Meßwert eingetragen, hat das hier noch keine Auswirkungen, führt später aber zu einer negativen Entscheidung über die Gebührenerhebung. Die unwirksamen Referenzgruppen spielen bei der Komprimierung keine Rolle mehr.

Die Komprimierung der eingetragenen Zählerstände F (Durchfahrfolge) geschieht nach dem arithmetischen Mittel über alle gespeicherten Meßwerte der Referenzgruppe. Das Gewicht der Durchfahrfolge Fg der g-ten Referenzgruppe wird berechnet durch:

$$\bar{F}_g = \frac{1}{M_g} \sum_{i=1}^{M_i} \bar{F}_i \qquad\qquad (2.8)$$

Fi - abgespeicherter Zählerstand F des i-ten Meßwerts
Mg - Anzahl der Meßwerte in der Referenzgruppe

2.2.3 Auswerten der Durchfahrfolge

Die Durchfahrfolge der Referenzgruppen ist ein wichtiger Indikator dafür, ob sich das Fahrzeug tatsächlich auf der Autobahn bewegt hat. Innerhalb des Erfassungsabschnitts des offenen Systems ist das Wenden nicht ungestraft möglich, da es hier keine Autobahnanschlußstelle gibt. Ist die Folge der Gewichte der Durchfahrfolge nicht streng wachsend (oder fallend, im Fall des zweiseitigen Erfassungsabschnitts), so muß das Fahrzeug die Land- oder Stadtstraßen des Gebiets benutzt haben. Für einseitige Erfassungsabschnitte ist die fallende Durchfahrfolge auszuschließen.

Ist in einer Referenzgruppe überhaupt kein Gewicht der Durchfahrfolge (=0) eingetragen, hat das hier noch keine Auswirkungen, führt später aber zu einer negativen Entscheidung über die Gebührenerhebung.

Eine Störung der Durchfahrfolge liegt vor, wenn

bei wachsender Folge das Gewicht des Nachfolgers um weniger als Q größer ist als das des Vorgängers,
bei fallender Folge das Gewicht des Nachfolgers um weniger als Q kleiner ist als das des Vorgängers.

Die Entscheidung über die Gebührenerhebung fällt dann negativ aus.

Der Trennwert Q kann angesehen werden als Höhe der Stufe zwischen benachbarten Referenzgruppen, die von der Differenz der Gewichte der Durchfahrfolgen überschritten werden muß. Die korrekte Durchfahrfolge wird durch folgende Beziehungen festgelegt:

$$F_{g+1} - F_g \geq Q \quad \text{(wachsende Durchfahrfolge)}$$
$$F_g - F_{g+1} \geq Q \quad \text{(fallende Durchfahrfolge)} \qquad (2.9)$$

Die Festlegung des Trennwerts Q ist Gegenstand der Parameteroptimierung (Abschnitt 6.7), er liegt etwa bei 1. Beispiel mit Q=1:

1. Serie: F = 2,7/4,8/7,2/10,1 (streng steigende Durchfahrfolge, zwischen aufeinanderfolgenden Werten ist mindestens 1 Unterschied)

2. Serie: F = 3,2/4,0/5,9/1,8 (wechselnde Durchfahrfolge, zwischen aufeinanderfolgenden Werten ist zweimal weniger als 1 Unterschied, sogar einmal negativ, d.h. Schleife im Autobahnbereich, aber nicht auf der Autobahn)

2.2.4 Prüfen der mittleren Präzision

Im Abschnitt 2.1.3 ist die Wirkungsweise der Präzision (DOP) bereits beschrieben worden. Es darf unter keinen Umständen passieren, daß ein Fahrzeug auf einer parallelverlaufenden Straße in die Gebührenerhebung hineingerät, weil viele Meßpositionen mit schlechterer Präzision (hoher DOP) "in die Autobahn hineinspringen". Der modifizierte Radialabstand ist ein Mittel, diese Möglichkeit einzuschränken. Ein weiteres Mittel ist der Vergleich der mittleren Präzision aller Meßpositionen im IN-Zustand PIN mit der mittleren Präzision aller Zuordnungswerte der wirksamen Referenzgruppen PG nach folgender Regel:

Gilt PIN +P< PG, so fällt die Entscheidung über die Gebührenerhebung negativ aus.

Hier hat der Präzisions-Vergleichswert P eine große Verantwortung. Ist er zu klein, so werden normale Schwankungen der DOP innerhalb der Meßreihe eines Erfassungsabschnitts schlecht ausgeglichen, so daß zu oft negativ entschieden wird. Ist er zu groß, erübrigt sich das Prüfen der mittleren Präzision überhaupt. Sein sinnvoller Wertebereich ist 1..3.

Man ist mit der Präzisionsprüfung ein Stück mehr auf der sicheren Seite, dem Fahrzeug nicht fälschlicherweise Gebühren zu berechnen. Es ist weniger schlimm, wenn durch diese Regel u.U. ein auf der Autobahn befindliches Fahrzeug durch die Gebührenerhebung rutscht.

Beispiele mit P=1,5 und P=3,5:

PIN = 3,22; PG = 5,67

P=1,5: 3,22+1,5 = 4,72<5,67 (negative Entscheidung wegen deutlicher DOP-Unterschiede)

P=3,5: 3,22+3,5 = 6,72>5,67 (zunächst keine negative Entscheidung trotz deutlicher DOP-Unterschiede wegen zu großem Präzisions-Vergleichswert)

2.2.5 Fuzzy-logisches Entscheiden über die Gebührenerhebung

Grundlagen der Fuzzy-Logik sind an sich bekannt. Haben die Prüfung des Schlauchkoeffizienten, der Durchfahrfolge und der mittleren Präzision keine negativen Ergebnisse geliefert, wird schließlich anhand eines fuzzy-logischen Modells über die Gebührenerhebung entschieden. Es wertet die Längen- und Breitendifferenzen aller Referenzgruppen aus, wobei die Aussage über die Nähe zum Referenzpunkt unscharf gefaßt wird mit dem Erfüllungsgrad mg E [0,1] bezüglich der g-ten Referenzgruppe.

Dieser wird aus den beiden Fuzzy-Kennlinien für Längen- und Breitendifferenz ermittelt, deren Parameter im einzelnen noch zu quantifizieren sind. Beide Fuzzy-Kennlinien sollen identisch in ihren Parametern sein.

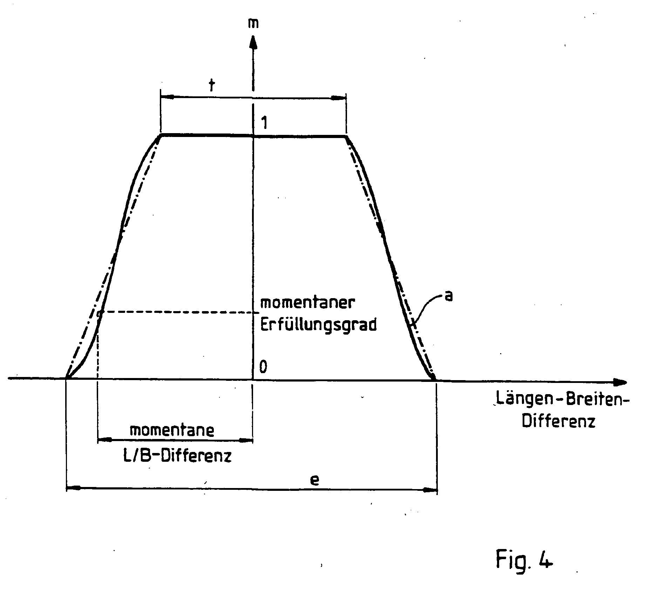

Fig. 4 verdeutlicht die Gestalt einer solchen Fuzzy-Kennlinie mit ihren drei entscheidenden Parametern:

Toleranz t

Einflußbreite e

Kontrastintensivierung a E [1,=6]

Der dritte Parameter wird aus der Darstellung nicht hinreichend deutlich, er beschreibt den Grad der Ausweitung (in der oberen Hälfte) bzw. Verengung (in der unteren Hälfte) der Flanke bezüglich einer Gerade. Die resultierende Flankenkurve genügt der Gleichung:

$$\mu^* = 0.5[2\mu]^{\alpha}; \mu < 0.5$$
$$\mu^* = 1-0.5[2(1-\mu)]^{\alpha}; \mu > 0.5 \qquad (2.10)$$

Die Gestalt der Fuzzy-Kennlinie läßt sich so interpretieren, daß für kleine Entfernungen vom Referenzpunkt ein maximaler Erfüllungsgrad von 1 (Bedingung zu 100% erfüllt) angesetzt wird, für mittlere Entfernungen eine "Grauzone" mit nach außen hin fallendern Erfüllungsgrad eingebracht wird (Bedingung zu einem gewissen Prozentsatz erfüllt) und für große Entfernungen der Erfüllungsgrad auf 0 gesetzt wird (Bedingung gar nicht erfüllt).

Für jede Referenzgruppe 9 werden der

Erfüllungsgrad für die Längendifferenz mLg

Erfüllungsgrad für die Breitendifferenz mBg

ermittelt. Wie in Fig. 4 gezeigt, trägt man auf der x-Achse die Längen- bzw. die Breitendifferenz ab, man ermittelt den Schnittpunkt der errichteten Senkrechten mit der Fuzzy-Kennlinie und zieht davon die Waagerechte bis zur y-Achse, wo der Erfüllungsgrad abgelesen wird. Längen- und Breitendifferenz müssen getrennt ausgewertet werden, da die Konstruktion der Kennlinie aus der getrennten Toleranzstatistik des GPS-Empfängers für Längen- und Breitenkoordinaten heraus erfolgt.

Der Erfüllungsgrad mg wird über eine FUZZY-UND-Verknüpfung bestimmt:

$$\mu_g = \gamma\, \text{MIN}(\mu_{Lg}, \mu_{Bg}) + (1-\gamma)\cdot\frac{1}{2}(\mu_{Lg} + \mu_{Bg}) \qquad (2.11)$$

Eine wichtige Rolle spielt hier der

g-Operator E [0,1],

der zwischen Minimum und arithmetischem Mittel abwägt und dessen genauer Wert ein Gegenstand der Parameteroptimierung sein wird. Der Erfüllungsgrad m E [0,1] bezüglich des gesamten Erfassungsabschnitts wird durch ein mehrfaches FUZZY-UND mit demselben g-Operator wie in (2.11) bestimmt:

$$\mu = \gamma\, \text{MIN}(\mu_1, \mu_2 \dots \mu_G) + (1-\gamma)\cdot\frac{1}{G}\sum_{g=1}^{G}\mu_g \qquad (2.12)$$

Mit dieser Beziehung werden alle Referenzgruppen vollkommen gleichberechtigt in die Entscheidungsfindung einbezogen. Es gibt keine individuellen Wichtungsfaktoren für die einzelnen Referenzgruppen. Die Gleichwertigkeit der Referenzgruppen ist eine wichtige Randbedingung für die Gestaltung der Erfassungsabschnitte.

Der letzte Schritt der Entscheidung über die Gebührenerhebung ist der Vergleich mit einem gesetzten (Erhebungs-)Schwellwert S anhand der Regel: Bezahle, wenn m>S, ansonsten nicht!

Der Schwellwerts liegt etwa im Bereich von 0,6..0,8. Ein wichtiger Anhaltspunkt ist der, daß im Fall eines sehr kleinen Erfüllungsgrads in einer Referenzgruppe (z.B. =0, wenn diese Referenzgruppe überhaupt nicht befahren worden ist) der Erfüllungsgrad bezüglich des gesamten Erfassungsabschnitts den Erhebungs-Schwellwert sicher unterschreiten muß.

| Beispiel mit g=0,5 und S=0,7: | | | |
| --- | --- | --- | --- |
| Erfüllungsgrad 1. R-gruppe, 2. R-gruppe, 3. R-gruppe gesamt | | | |
| Längengrad | 0,75 | 0,98 | 0,88 | |
| Breitengrad | 0,86 | 1,00 | 0,62 | |
| zusammen | 0,7775 | 0,985 | 0,685 | 0,7504>0,7 |

Der Gesamt-Erfüllungsgrad liegt über dem Erhebungsschwellwart. Dank der fuzzy-logischen Verknüpfung wird die Wirkung des individuellen Minimalwertes von 0,62 relativiert.

Das Flag "Bezahlen ja/nein?" ist der wichtigste Ausgabeparameter des gesamten Lokalisierungsalgorithmus. Es besitzt zwei Zustände:

VOID - keine Gebührenerhebung (Grundzustand, "nein", 0)
PAY - Gebührenerhebung ("ja", 1)

Außerdem wird die Schlüsselzahl des passierten Erfassungsabschnitts angezeigt.

**Patentansprüche**

**Patentansprüche für folgende(n) Vertragsstaat(en): AT, BE, CH, DK, GR, LI, LU**

1. Verfahren zur Ermittlung von Gebühren für die Nutzung von Verkehrswegen durch Fahrzeuge in Abhängigkeit vorn Passieren von an den Verkehrswegen angeordneten Erfassungsstellen, wobei die geographische Position eines Fahrzeugs laufend mit Hilfe von Funkortung, mit dem GPS-System, ermittelt und mit geographischen Positionen von virtuellen Erfassungsstellen, deren Positionen als ausgewählte Punkte der Verkehrswege gespeichert sind, verglichen wird, **dadurch gekennzeichnet, daß** die virtuellen Erfassungsstellen jeweils von einem streifenförmigen Erfassungsabschnitt entlang einer Kette von Punkten auf einer vorgegebenen Länge des jeweiligen Verkehrsweges gebildet werden und daß ein Fahrzeug als die Erfassungsstelle passiert gilt, wenn durch einen Vergleich der laufend ermittelten Positionen mit Punkten innerhalb des Erfassungsabschnitts festgestellt wird, daß das Fahrzeug den Erfassungsabschnitt in seiner gesamten Länge durchfahren hat.

2. Verfahren nach Anspruch 1, **dadurch gekennzeichnet, daß** die Kette von Punkten aus mehreren durch ihre geographischen Positionen festgelegten Referenzpunkten besteht, deren Abstand kleiner als der Meßfehler des Funkortungssystems ist, und daß ein Fahrzeug als die Erfassungsstelle passiert gilt, wenn alle Referenzpunkte eine Entfernung von für das Fahrzeug ermittelten Positionen aufweisen, die kleiner als eine vorgegebene Entfernung sind.

3. Verfahren nach Anspruch 1, **dadurch gekennzeichnet, daß** die Kette von Punkten aus mehreren durch ihre geographischen Positionen festgelegten Referenzpunkten besteht, deren Abstand kleiner als der Meßfehler des Funkortungssystems ist, daß jeweils ein Teil der Referenzpunkte eines Erfassungsabschnittes eine Referenzgruppe bilden und daß ein Fahrzeug als die Erfassungsstelle passiert gilt, wenn alle Referenzgruppen eine Entfernung von für das Fahrzeug ermittelten Positionen aufweisen, die kleiner als eine vorgegebene Entfernung sind.

4. Verfahren nach Anspruch 1, **dadurch gekennzeichnet, daß** die Kette von Punkten aus einem oder mehreren durch ihre geographische Position festgelegten Referenzpunkten und einer den Straßenverlauf innerhalb des Erfassungsabschnitts kennzeichnenden Funktion besteht.

5. Verfahren nach Anspruch 4, **dadurch gekennzeichnet, daß** ein Fahrzeug als die Erfassungsstelle passiert gilt, wenn keiner der Punkte der Kurve weiter als der Meßfehler des Funkortungssystems von einer der laufend bestimmten geographischen Positionen des Fahrzeugs entfernt liegt.

6. Verfahren nach einem der vorhergehenden Ansprüche, **dadurch gekennzeichnet, daß** vor einer Prüfung, ob sich das Fahrzeug im Erfassungsabschnitt befindet, durch Positionsvergteiche geprüft wird, ob sich das Fahrzeug in einem den Erfassungsabschnitt im wesentlichen umfassenden Gebiet mit größerer Fläche befindet.

7. Verfahren nach Anspruch 6, **dadurch gekennzeichnet, daß** das Gebiet größerer Fläche ein Rechteck ist.

**Patentansprüche für folgende(n) Vertragsstaat(en): DE, ES, FR, GB, IT, NL, SE**

1. Verfahren zur Ermittlung von Gebühren für die Nutzung von Verkehrswegen durch Fahrzeuge in Abhängigkeit vom Passieren von an den Verkehrswegen angeordneten Erfassungsstellen; wobei die geographische Position eines Fahrzeugs laufend mit Hilfe von Funkortung, mit dem GPS-System, ermittelt und mit geographischen Positionen von virtuellen Erfassungsstellen, deren Positionen als ausgewählte Punkte der Verkehrswege gespeichert sind, verglichen wird, **dadurch gekennzeichnet, daß** die virtuellen Erfassungsstellen jeweils von einem streifenförmigen Erfassungsabschnitt entlang einer Kette von Punkten auf einer vorgegebenen Länge des jeweiligen.Verkehrsweges gebildet werden, und daß ein Fahrzeug als die Erfassungsstelle passiert gilt, wenn durch einen Vergleich der laufend ermittelten Positionen mit Punkten innerhalb des Erfassungsabschnitts festgestellt wird, daß das Fahrzeug den Erfassungsabschnitt in seiner gesamten Länge durchfahren hat, wobei die Kette von Punkten aus mehreren durch ihre geografischen Positionen festgelegten Referenzpunkten besteht, deren Abstand kleiner als der Messfehler von etwa 100 m des Funkortungssystems ist.

2. Verfahren nach Anspruch 1, **dadurch gekennzeichnet, daß** die Kette von Punkten aus mehreren durch ihre geographischen Positionen festgelegten Referenzpunkten besteht, deren Abstand kleiner als der Meßfehler des Funkortungssystems ist, und daß ein Fahrzeug als die Erfassungsstelle passiert gilt, wenn alle Referenzpunkte eine Entfernung von für das Fahrzeug ermittelten Positionen aufweisen, die kleiner als eine vorgegebene Entfernung sind.

3. Verfahren nach Anspruch 1, **dadurch gekennzeichnet, daß** die Kette von Punkten aus mehreren durch ihre geographischen Positionen festgelegten Referenzpunkten besteht, deren Abstand kleiner als der Meßfehler des Funkortungssystems ist, daß jeweils ein Teil der Referenzpunkte eines Erfassungsabschnittes eine Referenzgruppe bilden und daß ein Fahrzeug als die Erfassungsstelle passiert gilt, wenn alle Referenzgruppen eine Entfernung von für das Fahrzeug ermittelten Positionen aufweisen, die kleiner als eine vorgegebene Entfernung sind.

4. Verfahren nach Anspruch 1, **dadurch gekennzeichnet, daß** die Kette von Punkten aus einem oder mehreren durch ihre geographische Position festgelegten Referenzpunkten und einer den Straßenverlauf innerhalb des Erfassungsabschnitts kennzeichnenden Funktion besteht.

5. Verfahren nach Anspruch 4, **dadurch gekennzeichnet, daß** ein Fahrzeug als die Erfassungsstelle passiert gilt, wenn keiner der Punkte der Kurve weiter als der Meßfehler des Funkortungssystems von einer der laufend bestimmten geographischen Positionen des Fahrzeugs entfernt liegt.

6. Verfahren nach einem der vorhergehenden Ansprüche, **dadurch gekennzeichnet, daß** vor einer Prüfung, ob sich das Fahrzeug im Erfassungsabschnitt befindet, durch Positionsvergleiche geprüft wird, ob sich das Fahrzeug in einem den Erfassungsabschnitt im wesentlichen umfassenden Gebiet mit größerer Fläche befindet.

7. Verfahren nach Anspruch 6, **dadurch gekennzeichnet, daß** das Gebiet größerer Fläche ein Rechteck ist.

## Claims

**Claims for the following Contracting State(s): AT, BE, CH, DK, GR, LI, LU**

1. A method for determining charges for the use of roadways by vehicles as a function of passing pickup points arranged at the roadways, in which the geographical position of a vehicle is determined continuously by means of radio locating, in particular by the GPS system and compared with geographical positions of virtual pickup points, the positions of which are stored as selected points on the roadways, **characterised in that** the virtual pickup points are respectively formed by a strip-shaped pickup section along a chain of points on a given length of the respective roadway and that a vehicle is deemed to have passed the pickup point when by a comparison of the continuously determined positions with points within the pickup section it is established that the vehicle has passed through the pickup section in its entire length.

2. The method according to Claim 1, **characterised in that** the chain of points consists of several reference points established by their geographical positions, the spacing of which is smaller than the measurement error of the radio locating system, and that a vehicle is deemed to have passed the pickup point when all reference points have a distance from positions determined for the vehicle which are smaller than a given distance.

3. The method according to Claim 1, **characterised in that** the chain of points consists of several reference points established by their geographical positions, the spacing of which is smaller than the measurement error of the radio locating system, that respectively a portion of the reference points of a pickup section form a reference group and that a vehicle is deemed to have passed the pickup point when all reference groups have a distance from positions determined for the vehicle which are smaller than a given distance.

4. The method according to Claim 1, **characterised in that** the chain of points consists of one or more reference points established by their geographical position and of a function characterising the road pattern within the pickup section.

5. The method according to Claim 4, **characterised in that** a vehicle is deemed to have passed the pickup point when none of the points of the curve lies further away than the measurement error of the radio locating system from one of the continuously determined geographical positions of the vehicle.

6. The method according to any of the preceding claims, **characterised in that** before a check as to whether the vehicle is situated in the pickup section, a check is made by position comparisons, as to whether the vehicle is situated in a zone with larger area substantially comprising the pickup section.

7. The method according to Claim 6, **characterised in that** the zone with larger area is a rectangle.

**Claims for the following Contracting State(s): DE, ES, FR, GB, IT, NL, SE**

1. Process

a for determining toll charges for using traffic routes by vehicles as a function of the passing of recording points arranged on the traffic routes,

b wherein the geographical position of a vehicle is determined continuously with the aid of radiolocation using the GPS system

c and compared with geographical positions of virtual recording points, the positions of which are stored as selected points of the traffic routes,

**characterised in that**

d the virtual recording points are formed in each case by a strip-like recording section along a chain of points on a preset length of the particular traffic route,

e and **in that** a vehicle is regarded as having passed the recording point when, by a comparison of the continuously determined positions with points within the recording section, it is established that the entire length of the vehicle has travelled through the recording section,

f wherein the chain of points consists of several reference points fixed by their geographical positions, the interval of which is less than the measuring error of about 100 m of the radiolocation system.

2. Process according to claim 1, **characterised in that** a vehicle is regarded as having passed the recording point when all reference points have a distance from positions determined for the vehicle which are less than a preset distance.

3. Process according to claim 1, **characterised in that** in each case some of the reference points of a recording section form a reference group and **in that** a vehicle is regarded as having passed the recording point when all reference groups have a distance from positions determined for the vehicle which are less than a preset distance.

4. Process according to claim 1, **characterised in that** the chain of points consists of one or more reference points fixed by their geographical position and a function characterising the course of the road within the recording section.

5. Process according to claim 4, **characterised in that** a vehicle is regarded as having passed the recording point when none of the points of the curve lies further away than the measuring error of the radiolocation system from one of the continuously determined geographical positions of the vehicle.

6. Process according to one of the preceding claims, **characterised in that** before a check of whether the vehicle is situated in the recording section, a check is made by position comparisons whether the vehicle is situated in a region with greater surface area essentially encompassing the recording section.

7. Process according to claim 6, **characterised in that** the region of greater surface area is a rectangle.

**Revendications**

**Revendications pour l'(les) Etat(s) contractant(s) suivant(s): AT, BE, CH, DK, GR, LI, LU**

1. Procédé pour déterminer des péages pour l'utilisation de voies de circulation par des véhicules, en fonction du franchissement de postes de péage disposés sur lesdites voies de circulation, selon lequel la position géographique d'un véhicule est déterminée en permanence par radiorepérage, en particulier à l'aide du système GPS, et comparée aux positions géographiques de postes de péage virtuels dont les positions sont mises en mémoire sous la forme de points sélectionnés des voies de circulation, **caractérisé en ce que** chaque point de péage virtuel est défini par une section de détection en forme de bande, le long d'une chaîne de points sur une longueur prédéfinie de la voie de circulation, et **en ce qu'**un véhicule est considéré comme ayant franchi le poste de péage quand on constate, en comparant les positions déterminées en permanence à des points situés à l'intérieur de la section de détection, que le véhicule a traversé la section de détection sur toute sa longueur.

2. Procédé selon la revendication 1, **caractérisé en ce que** la chaîne de points se compose de plusieurs points de référence fixés par leurs positions géographiques et dont l'écartement est inférieur à l'erreur de mesure du système de radiorepérage, et **en ce qu'**un véhicule est considéré comme ayant franchi le poste de péage quand tous les points de référence se trouvent par rapport à des positions déterminées pour le véhicule à une distance qui est inférieure à une distance prédéfinie.

**3.** Procédé selon la revendication 1, **caractérisé en ce que** la chaîne de points se compose de plusieurs points de référence fixés par leurs positions géographiques et dont l'écartement est inférieur à l'erreur de mesure du système de radiorepérage, **en ce qu'**une partie des points de référence d'une section de détection forment un groupe de référence, et **en ce qu'**un véhicule est considéré comme ayant franchi le poste de péage quand tous les points de référence se trouvent par rapport à des positions déterminées pour le véhicule à une distance qui est inférieure à une distance prédéfinie.

**4.** Procédé selon la revendication 1, **caractérisé en ce que** la chaîne de points se compose d'un ou plusieurs points de référence fixés par leurs positions géographiques, et d'une fonction qui caractérise le tracé de la route à l'intérieur de la section de détection.

**5.** Procédé selon la revendication 4, **caractérisé en ce qu'**un véhicule est considéré comme ayant franchi le poste de péage quand aucun des points de la courbe ne présente par rapport à l'une des positions géographiques du véhicule définies en permanence une distance supérieure à l'erreur de mesure du système de radiorepérage.

**6.** Procédé selon l'une des revendications précédentes, **caractérisé en ce que**, avant de vérifier si le véhicule se trouve dans la section de détection, on vérifie grâce à une comparaison de positions si le véhicule se trouve dans une zone à surface assez grande qui couvre dans l'ensemble la section de détection.

**7.** Procédé selon la revendication 6, **caractérisé en ce que** la zone à grande surface est un rectangle.

**Revendications pour l'(les) Etat(s) contractant(s) suivant(s): DE, ES, FR, GB, IT, NL, SE**

**1.** Procédé

a) pour déterminer des péages pour l'utilisation de voies de circulation par des véhicules, en fonction du franchissement de postes de péage disposés sur lesdites voies de circulation,
b) selon lequel la position géographique d'un véhicule est déterminée en permanence par radiorepérage, à l'aide du système GPS,
c) et est comparée aux positions géographiques de postes de péage virtuels dont les positions sont mises en mémoire sous la forme de points sélectionnés des voies de circulation, **caractérisé**
d) **en ce que** chaque point de péage virtuel est défini par une section de détection en forme de bande, le long d'une chaîne de points sur une longueur prédéfinie de la voie de circulation,
e) et **en ce qu'**un véhicule est considéré comme ayant franchi le poste de péage quand on constate, en comparant les positions déterminées en permanence à des points situés à l'intérieur de la section de détection, que le véhicule a traversé la section de détection sur toute sa longueur,
f) la chaîne de points se composant de plusieurs points de référence fixés par leurs positions géographiques et dont l'écartement est inférieur à l'erreur de mesure d'environ 100 m du système de radiorepérage.

**2.** Procédé selon la revendication 1, **caractérisé en ce qu'**un véhicule est considéré comme ayant franchi le poste de péage quand tous les points de référence se trouvent par rapport à des positions déterminées pour le véhicule à une distance qui est inférieure à une distance prédéfinie.

**3.** Procédé selon la revendication 1, **caractérisé en ce qu'**une partie des points de référence d'une section de détection forment un groupe de référence, et **en ce qu'**un véhicule est considéré comme ayant franchi le poste de péage quand tous les points de référence se trouvent par rapport à des positions déterminées pour le véhicule à une distance qui est inférieure à une distance prédéfinie.

**4.** Procédé selon la revendication 1, **caractérisé en ce que** la chaîne de points se compose d'un ou plusieurs points de référence fixés par leurs positions géographiques, et d'une fonction qui caractérise le tracé de la route à l'intérieur de la section de détection.

**5.** Procédé selon la revendication 4, **caractérisé en ce qu'**un véhicule est considéré comme ayant franchi le poste de péage quand aucun des points de la courbe ne présente par rapport à l'une des positions géographiques du véhicule définies en permanence une distance supérieure à l'erreur de mesure du système de radiorepérage.

**6.** Procédé selon l'une des revendications précédentes, **caractérisé en ce que**, avant de vérifier si le véhicule se trouve dans la section de détection, on vérifie grâce à une comparaison de positions si le véhicule se trouve dans une zone à surface assez grande qui couvre dans l'ensemble la section de détection.

7.  Procédé selon la revendication 6, **caractérisé en ce que** la zone à grande surface est un rectangl

Fig. 1

Fig. 2

Fig. 3

Fig. 4